# EUROPEAN PATENT SPECIFICATION

(11) **EP 3 394 524 B1**
(45) Date of publication and mention of the grant of the patent: **13.04.2022**
(21) Application number: 15825731.1
(22) Date of filing: 21.12.2015
(51) Int. Cl.: F25B 21/00

(54) **ELECTROCALORIC HEAT TRANSFER SYSTEM**
ELEKTROKALORISCHES WÄRMETRANSFERSYSTEM
SYSTÈME DE TRANSFERT DE CHALEUR ÉLECTROCALORIQUE

(43) Date of publication of application: 31.10.2018
(73) Proprietor: Carrier Corporation, Palm Beach Gardens, FL 33418 (US)
(72) Inventor: GORBOUNOV, Mikhail B., Princeton, NJ 08540 (US); VERMA, Parmesh, South Windsor, Connecticut 06074 (US); ANNAPRAGADA, Subramanyaravi, Shrewsbury, Massachusetts 01545 (US); KUCZEK, Andrzej E., Bristol, Connecticut 06010 (US); LYNCH, Matthew E., Cantoon, Connecticut 06019 (US); SMELTZ, Andrew, Glastonbury, Connecticut 06033 (US); HERRING, Neal R., East Hampton, Connecticut 06424 (US); JONSSON, Ulf J., South Windsor, Connecticut 06074 (US); RADCLIFF, Thomas D., Vernon, Connecticut 06066 (US)
(74) Representative: Dehns
(86) International application number: PCT/US2015/067182
(87) International publication number: WO 2017/111916

(56) References cited:
- EP-A1- 2 945 198
- WO-A1-2015/156794
- US-B1- 6 877 325
- None

## Description

### BACKGROUND

A wide variety of technologies exist for cooling applications, including but not limited to evaporative cooling, convective cooling, or solid state cooling such as electrothermic cooling. One of the most prevalent technologies in use for residential and commercial refrigeration and air conditioning is the vapor compression refrigerant heat transfer loop. These loops typically circulate a refrigerant having appropriate thermodynamic properties through a loop that comprises a compressor, a heat rejection heat exchanger (i.e., heat exchanger condenser), an expansion device and a heat absorption heat exchanger (i.e., heat exchanger evaporator). Vapor compression refrigerant loops effectively provide cooling and refrigeration in a variety of settings, and in some situations can be run in reverse as a heat pump. However, many of the refrigerants can present environmental hazards such as ozone depleting potential (ODP) or global warming potential (GWP), or can be toxic or flammable. Additionally, vapor compression refrigerant loops can be impractical or disadvantageous in environments lacking a ready source of power sufficient to drive the mechanical compressor in the refrigerant loop. For example, in an electric vehicle, the power demand of an air conditioning compressor can result in a significantly shortened vehicle battery life or driving range. Similarly, the weight and power requirements of the compressor can be problematic in various portable cooling applications.

Accordingly, there has been interest in developing cooling technologies as alternatives to vapor compression refrigerant loops. Various technologies have been proposed such as field-active heat or electric current-responsive heat transfer systems relying on materials such as electrocaloric materials, magnetocaloric materials, or thermoelectric materials. However, many proposals have been configured as bench-scale demonstrations with limited capabilities for scalability or mass production.

WO 2015/156794 A1 discloses a heat pump element comprising a thin-film polymer or ceramic material and electrodes coupled to both sides of the thin-film material.

### BRIEF DESCRIPTION

According to the present invention, there is provided a heat transfer system as recited in claim 1.

According to some embodiments of this disclosure, a heat transfer system comprises a continuous electrocaloric film comprising electrode layers on each side thereof, looped on a plurality of support elements to form a plurality of physically separated layers of the electrocaloric polymer film providing a fluid flow path between adjacent layers.

In any of the foregoing embodiments, the electrically conductive corrugated spacers are configured as a microchannel structure or an open-cell foam.

In any of the foregoing embodiments, the electrically conductive corrugated spacers comprise carbon nanotubes.

In any of the foregoing embodiments, the fluid flow guide elements comprise electrocaloric elements from said plurality of electrocaloric elements.

In any of the foregoing embodiments, the electrocaloric elements comprise alternating adjacent flat electrocaloric elements and corrugated electrocaloric elements.

In any of the foregoing embodiments, the electrocaloric elements comprise complementary corrugated electrocaloric elements that cooperate to form a honeycomb structure.

In any of the foregoing embodiments, adjacent electrocaloric elements comprise adhesive joints at intersecting junctions.

In any of the foregoing embodiments, the plurality of electrocaloric elements are arranged in an alternating order of polarity between adjacent electrocaloric elements.

In any of the foregoing embodiments, the electrocaloric film comprises an electrocaloric polymer, liquid crystal polymer (LCP), electrocaloric ceramic or an electrocaloric polymer/ceramic composite.

In any of the foregoing embodiments, a physical separation between adjacent electrocaloric elements is 1 µm to 100 mm.

In any of the foregoing embodiments, the electrocaloric elements have a thickness of 1 µm to 1000 µm.

In any of the foregoing embodiments, the electrocaloric film comprises an electrocaloric polymer.

In any of the foregoing embodiments comprising a continuous looped electrocaloric film, the heat transfer system further comprises one or more spacer elements disposed between adjacent layers of the electrocaloric film. In some embodiments, the one or more spacer elements are electrically conductive. In some embodiments, the one or more spacer elements are electrically non-conductive.

In any of the foregoing embodiments comprising a continuous looped electrocaloric film, the support elements further comprise electrical bus elements in electrical contact with the conductive material electrode layers.

In any of the foregoing embodiments comprising a continuous looped electrocaloric film, the loops of the continuous electrocaloric polymer film are in a back and forth configuration.

In any of the foregoing embodiments, the heat transfer system comprises at least two adjacent electrocaloric elements that share an electrode at least partially embedded between the electrocaloric films of the adjacent electrocaloric elements. In some embodiments, the embedded electrode is a live electrode, and comprising ground electrodes adjacent to the fluid flow path.

In any of the foregoing embodiments, the electrocaloric film comprises an electrocaloric polymer film under tensile stress.

In any of the foregoing embodiments, the heat transfer system further comprises a first thermal flow path between the fluid flow path and a heat sink, a second thermal flow path between the fluid flow path and a heat source, and a controller configured to control electrical current to the electrodes and to selectively direct transfer of heat energy from the fluid flow path in thermal communication with electrocaloric element to the heat sink along the first thermal flow path or from the heat source to the fluid flow path in thermal communication with the electrocaloric element along the second thermal flow path.

### BRIEF DESCRIPTION OF THE DRAWINGS

Subject matter of this invention is particularly pointed out and distinctly claimed in the claims at the conclusion of the specification. The foregoing and other advantages of the present invention are apparent from the following detailed description taken in conjunction with the accompanying drawings in which:
FIG. 1 is a schematic depiction of an example embodiment of an electrocaloric heat transfer system and stack and spacer configuration;
FIGS. 2A, 2B, 2C, 2D, 2E, and 2F each is a schematic depiction of example embodiments of different corrugated spacer configurations;
FIG. 3 is a schematic depiction of an example embodiment of a corrugated spacer configuration with an electrically conductive spacer;
FIG. 4 is a schematic depiction of an example embodiment of a spacer that is integrated with an electrocaloric element electrode;
FIG. 5 is a schematic depiction of another example embodiment of a spacer that is integrated with an electrocaloric element electrode;
FIG. 6 is a schematic depiction of an example embodiment of a corrugated spacer configuration with an electrically non-conductive spacer;
FIG. 7 is a schematic depiction of an example embodiment where an electrocaloric element serves as a corrugated spacer;
FIG. 8 is a schematic depiction of another example embodiment where an electrocaloric element serves as a corrugated spacer;
FIG. 9 is a schematic depiction of another example embodiment where an electrocaloric element serves as a corrugated spacer;
FIG. 10 is a schematic depiction of an alternate embodiment of an electrocaloric heat transfer system and stack and spacer configuration;
FIG. 11 is a schematic depiction of an alternate embodiment of an electrocaloric heat transfer system and stack and spacer configuration; and
FIG. 12 is a schematic depiction of an example embodiment of heat transfer system comprising an electrocaloric stack and other components.

### DETAILED DESCRIPTION

As mentioned above, the heat transfer systems disclosed herein comprise a fluid flow along a plurality of electrocaloric elements, formed by corrugated fluid flow guide elements. In some embodiments, the corrugated fluid flow guide elements can mean fluid flow guide elements configured with ridges and/or grooves. Corrugated configurations are not limited to any particular configuration or design, and can include any configuration comprising grooves and/or ridges, including without limitation alternating grooves and ridges, regular patterns of grooves, ridges, wings, projections, and/or extensions, or irregular patterns with any of the above features. Examples of corrugated configurations include without limitation ziz-zag patterns, triangular, sinusoidal, regular or irregular waves, triangular, trapezoidal, rhomboidal, notched, square or rectangular notched, fluted, louvered with openings through the spacer element adjacent to or in between grooves, microchannel louvered, ridges, wings, or extensions, or any sort of irregular rough pattern such as an open-cell foam.

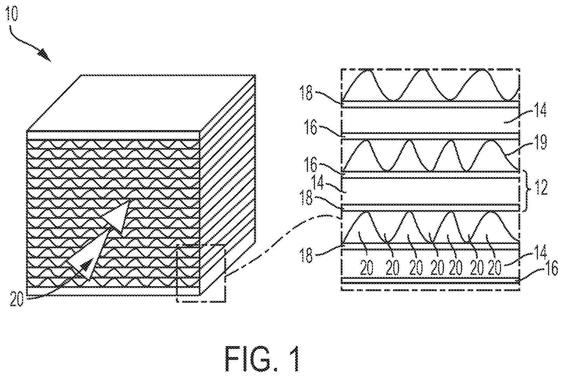

With reference now to FIG. 1, an example of a stack 10 of electrocaloric elements 12 is shown in a perspective view and in an exploded front cross-sectional view. As shown in FIG. 1, the electrocaloric elements 12 comprise an electrocaloric film 14, a first electrode 16, and a second electrode 18. In some embodiments, electrocaloric film thickness can be in a range from having a lower limit of 0.1 µm, more specifically 0.5 µm, and even more specifically 1 µm. In some embodiments, the film thickness range can and having an upper limit of 1000 µm, more specifically 100 µm and even more specifically 10 µm. It is understood that these upper and lower range limits can be independently combined to disclose a number of different possible ranges. Examples of electrocaloric materials for the electrocaloric film can include but are not limited to inorganic materials (e.g., ceramics), electrocaloric polymers, and polymer/ceramic composites. Examples of inorganics include but are not limited to PbTiO₃ ("PT"), Pb(Mg_{1/3}Nb_{2/3})O₃ ("PMN"), PMN-PT, LiTaO₃, barium strontium titanate (BST) or PZT (lead, zirconium, titanium, oxygen). Examples of electrocaloric polymers include, but are not limited to ferroelectric polymers, liquid crystal polymers, and liquid crystal elastomers.

Ferroelectric polymers are crystalline polymers, or polymers with a high degree of crystallinity, where the crystalline alignment of polymer chains into lamellae and/or spherulite structures can be modified by application of an electric field. Such characteristics can be provided by polar structures integrated into the polymer backbone or appended to the polymer backbone with a fixed orientation to the backbone. Examples of ferroelectric polymers include polyvinylidene fluoride (PVDF), polytriethylene fluoride, odd-numbered nylon, copolymers containing repeat units derived from vinylidene fluoride, and copolymers containing repeat units derived from triethylene fluoride. Polyvinylidene fluoride and copolymers containing repeat units derived from vinylidene fluoride have been widely studied for their ferroelectric and electrocaloric properties. Examples of vinylidene fluoride-containing copolymers include copolymers with methyl methacrylate, and copolymers with one or more halogenated co-monomers including but not limited to trifluoroethylene, tetrafluoroethylene, chlorotrifluoroethylene, trichloroethylene, vinylidene chloride, vinyl chloride, and other halogenated unsaturated monomers.

Liquid crystal polymers, or polymer liquid crystals comprise polymer molecules that include mesogenic groups. Mesogenic molecular structures are well-known, and are often described as rod-like or disk-like molecular structures having electron density orientations that produce a dipole moment in response to an external field such as an external electric field. Liquid crystal polymers typically comprise numerous mesogenic groups connected by non-mesogenic molecular structures. The non-mesogenic connecting structures and their connection, placement and spacing in the polymer molecule along with mesogenic structures are important in providing the fluid deformable response to the external field. Typically, the connecting structures provide stiffness low enough so that molecular realignment is induced by application of the external field, and high enough to provide the characteristics of a polymer when the external field is not applied.

In some exemplary embodiments, a liquid crystal polymer can have rod-like mesogenic structures in the polymer backbone separated by non-mesogenic spacer groups having flexibility to allow for re-ordering of the mesogenic groups in response to an external field. Such polymers are also known as main-chain liquid crystal polymers. In some exemplary embodiments, a liquid crystal polymer can have rod-like mesogenic structures attached as side groups attached to the polymer backbone. Such polymers are also known as side-chain liquid crystal polymers.

With continued reference to FIG. 1, corrugated spacer elements 19 are disposed between the electrocaloric elements 12, and form a fluid flow path 20 along the electrocaloric elements 12 for a working fluid such as a fluid to be thermally conditioned (e.g., air) or a heat transfer fluid (e.g., a dielectric organic compound) for thermal communication with an external heat source or heat sink. In some aspects, the corrugation pattern is on a plane generally perpendicular to the fluid flow path 20, and extends in a direction generally parallel to the fluid flow path 20. The extension along the fluid flow path can be linear (i.e., in a straight line) or non-linear. In some embodiments, spacing between adjacent electrocaloric elements can be in a range from having a lower limit of 1 µm, more specifically 10 µm, and even more specifically 50 µm. In some embodiments, the separation spacing range can have an upper limit of 200 mm, more specifically 10 mm, even more specifically 2 mm. It is understood that these upper and lower range limits can be independently combined to disclose a number of different possible ranges.

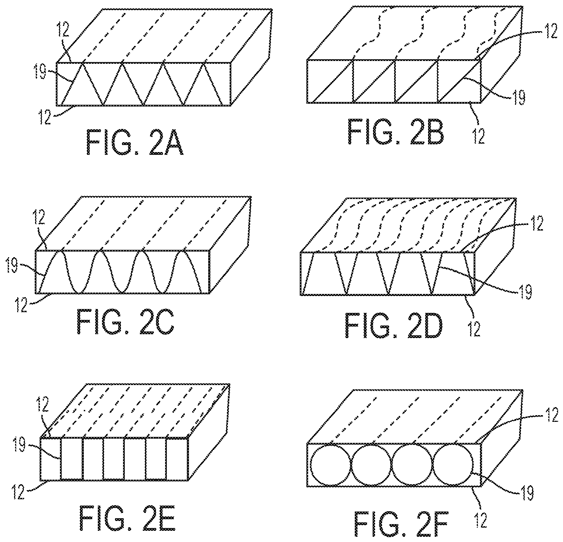

The corrugated spacer elements can have a variety of different configurations. A few representative examples of different configurations of spacer 19 disposed between electrocaloric elements 12 are shown in FIGS. 2A-2F. FIG. 2A depicts a triangular corrugated spacer configuration that extends linearly along the fluid flow path. FIG. 2B depicts a triangular corrugated spacer configuration that extends non-linearly along the fluid flow path (a waveform extension in this case, but other non-linear extension patterns are contemplated as well). FIG. 2C depicts a sinusoidal corrugated configuration that extends linearly along the fluid flow path. FIG. 2D depicts a trapezoidal corrugated configuration that extends non-linearly along the fluid flow path. FIG. 2E depicts a rectangular strip corrugated configuration that extends non-linearly along the fluid flow path. FIG. 2F depicts a cylindrical corrugated configuration that extends linearly along the fluid flow path. These examples are of course only representative of many possible configurations of corrugated spacer elements, and should not be considered as limiting. It should also be noted that although FIG. 1 depicts a single continuous spacer element between each electrocaloric element, multiple discrete corrugated spacer elements between electrocaloric elements can be used as well.

In some aspects of the disclosure, the corrugated spacer elements can contribute to maintaining a physical separation between electrocaloric elements for a fluid flow path. In some aspects of the disclosure, the corrugated spacer elements can contribute to structural integrity of a stack structure of electrocaloric elements. According to the invention the corrugated spacer elements contribute to electrical continuity between electrodes of the same polarity, and in some aspects the corrugated spacer elements can contribute to maintaining electrical isolation between electrodes of different or opposite polarity. In this regard, the corrugated spacer elements can be electrically conductive or electrically non-conductive.

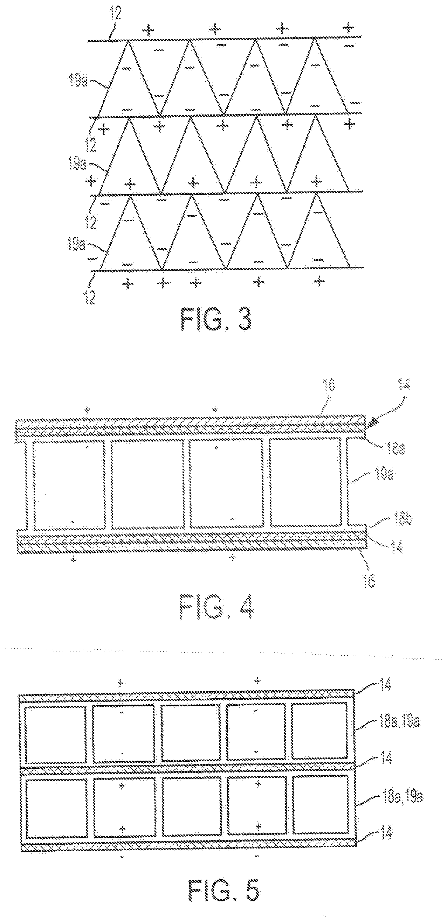

An example of an embodiment of electrically conductive spacer elements is depicted in FIG. 3. As shown in FIG. 3, electrocaloric elements 12 are disposed in a stack in an alternating order of polarity between adjacent electrocaloric elements 12, with the electrocaloric element 12 shown at the top of the stack having a positive polarity electrode on top and a negative polarity electrode on the bottom. Alternatively, instead of positive and negative electrodes in the stack, the electrodes can be categorized as either live electrodes (either positive or negative polarity) or ground electrodes. The electrocaloric element 12 adjacent to the top electrode has a reverse order of polarity with a negative electrode on top and a positive electrode on the bottom. This alternating order of polarity can then be repeated throughout the stack. Such a configuration allows the corrugated spacer elements 19a to be electrically conducting, which can help promote uniform charge across the electrodes and avoid parasitic or non-uniform electrical current that could adversely affect electrocaloric performance. Electrically conductive spacer elements can be formed by various techniques including but not limited to depositing a layer of conductive material like metal or carbon nanotubes and lithographically etching a corrugated pattern into the layer (e.g., through a lithographic mask), or depositing a conductive material or growing carbon nanotubes in a corrugated pattern, microchannel extrusion, open-cell foam, or by laminating a corrugated layer of conductive material to the electrocaloric element.

In some aspects, an electrically conductive spacer can be partially or fully integrated with one or more electrodes so that one element serves both as a spacer between electrocaloric elements and electrode as part of one or more electrocaloric elements. Examples of such embodiments are shown in FIGS. 4 and 5. As shown in FIG. 4, a partial integration is achieved by forming spacer element 19a as an extension of electrode 18a, which is then electrically connected to electrode 18b. This can be accomplished for example by depositing a conductive layer for electrode 18a (e.g., depositing carbon nanotubes by chemical vapor deposition or depositing metal by sputtering or other deposition techniques). The conductive layer can then be masked in areas other than where spacer 19a is desired, and continued deposition of conductive material continued to form the conductive spacer 19a. The resulting structure than then be connected to an adjacent electrocaloric element with an electrical connection between conductive spacer 19a and adjacent electrode 18b, with electrodes of different polarity disposed on the opposite sides of the electrocaloric films 14 from the electrodes 18a and 18b. An example of a full integration of a conductive spacer with electrodes on adjacent electrocaloric elements is shown in FIG. 5. In FIG. 5, an electrically conductive combination electrode 18a and spacer 19a can be formed by microchannel extrusion techniques and disposed between adjacent electrocaloric elements 14.

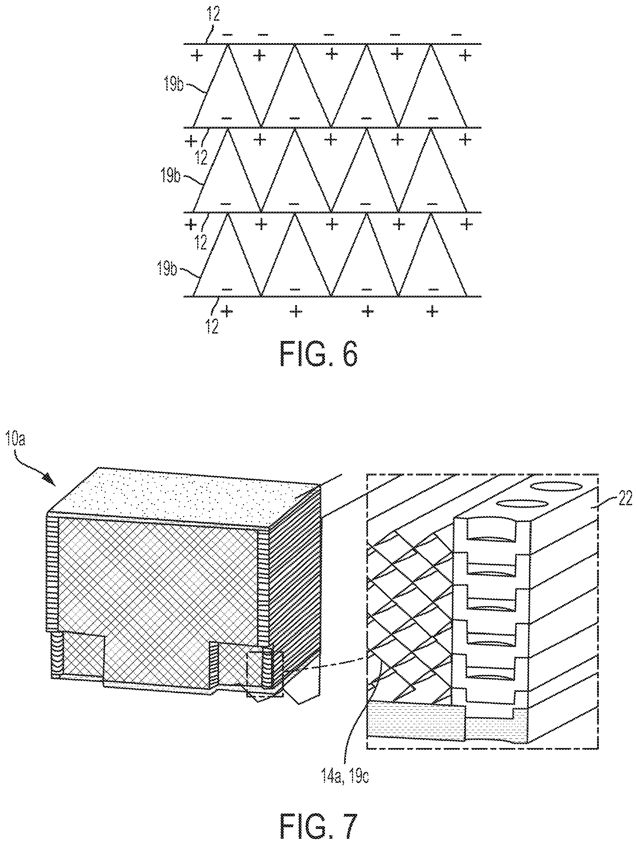

An example of an embodiment of electrically non-conductive spacer elements is depicted in FIG. 6. As shown in FIG. 6, electrocaloric elements 12 are disposed in a stack in a uniform order of polarity, with each electrocaloric element 12 having a negative polarity electrode on top and a positive polarity electrode on the bottom. Alternatively, instead of positive and negative electrodes in the stack, the electrodes can be categorized as either live electrodes (either positive or negative polarity) or ground electrodes. In this configuration, electrically non-conductive spacer elements 19b can contribute to electrical isolation between electrodes of different polarities by maintaining physical separation between the electrocaloric elements without providing a conductive path. Similar fabrication techniques as described above for conductive spacer elements can be used for non-conductive spacer elements, but with non-conductive materials, e.g., plastics or ceramics.

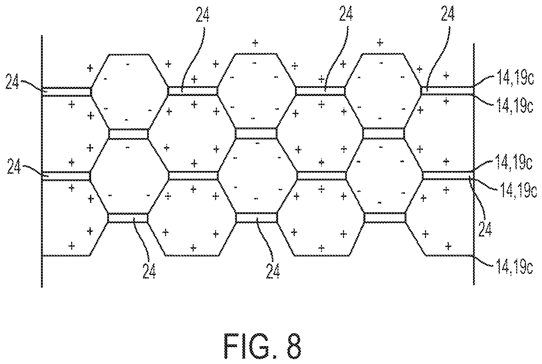

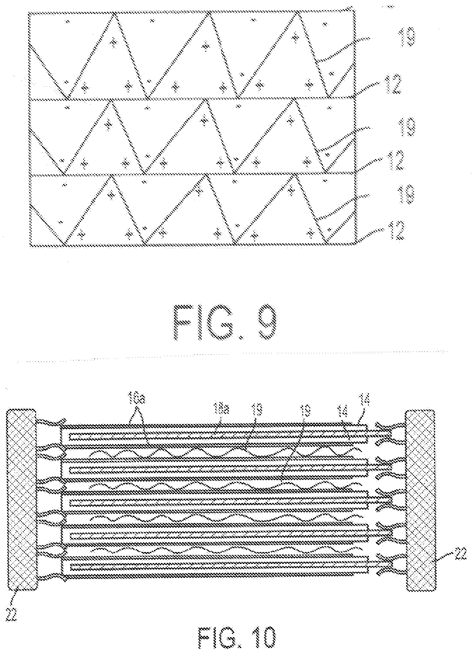

In some embodiments, the corrugated spacer element can be formed from the electrocaloric element itself so that both the electrocaloric element and the corrugated spacer element are provided by the same structure. Examples of such embodiments are shown in FIGS. 7 and 8. As shown in FIG. 7, a honeycomb structure of electrocaloric elements 14a is disposed in a stack 10a, retained at the edges by electric bus / support elements 22. The honeycomb structure of the electrocaloric elements 14a also provides a corrugated flow guide structure 19c. As used herein, "honeycomb" includes any cellular structure that extends generally parallel to the direction of fluid flow, and is not limited to hexagonal cellular structures. For example, the cellular structure depicted in FIG. 7 has a rhomboid cellular structure. In some aspects, the honeycomb structure of electrocaloric elements can utilize the above-described alternating order of polarity configuration to avoid shorting across adjoining electrocaloric elements in the structure, although this is not required, as insulators such as insulating adhesive could also be used to prevent short circuits. An example of such an alternating polarity configuration is illustrated in FIG. 8 for a hexagonal honeycomb structure, where electrocaloric elements 14 (comprising an electrocaloric film sandwiched between conductive electrodes as described herein) are configured in a honeycomb pattern to serve as both electrocaloric elements and as corrugated spacer structure 19c. A conductive adhesive (e.g., a polymer resin adhesive) joint 24 can optionally be disposed at the interfaces between adjacent electrocaloric elements to promote electrical and structural integrity for the structure. A non-conductive adhesive can also be used if an electrical connection at the interfaces is not needed or desired. In another embodiment, flat or planar electrocaloric elements 12 alternate with corrugated electrocaloric elements 19 to form a honeycomb structure (with the electrocaloric elements comprising an electrocaloric film sandwiched between conductive electrodes as described herein). An example of such a structure is shown in FIG. 9.

Another example of an embodiment is depicted in FIG. 10. With reference now to FIG. 10, a stack is shown where bus elements electrodes 16a and 18a are connected to bus bars 22. As shown in FIG. 10 the electrodes 18a are at least partially embedded between the electrocaloric films 14 of adjacent electrocaloric elements. In this embodiment, the electrode 18a serves as an electrode for two adjacent electrocaloric elements or, put another way, the two adjacent electrocaloric elements share a single electrode. The electrodes 16a of opposite polarity are disposed on the outside of the electrocaloric element 'sandwich' and are not shared. Spacer elements 19 are disposed between adjacent electrocaloric elements on the side of electrodes 16a. The configuration of FIG. 10 can provide technical benefits by protecting the embedded electrode 18a from potential short circuits. In some embodiments, the at least partially embedded electrode is a live electrode, and the electrode exposed to the fluid flow path is a ground electrode. In some embodiments, embedded electrodes of different shapes or configurations can be printed to provide various properties (e.g., stress management) to the electrocaloric elements. It should be noted that although FIG. 10 depicts a sandwich of two films surrounding the embedded electrode, sandwiches of more than two films with embedded electrodes of alternating polarities are also contemplated.

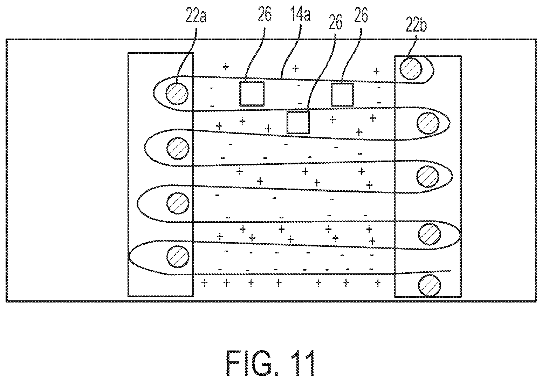

Another type of corrugated pattern can be provided by a continuous electrocaloric film comprising electrode layers on each side thereof, looped on a plurality of support elements. An example of such an embodiment is schematically depicted in FIG. 11 where a continuous electrocaloric element 14a is looped in a back and forth configuration around supporting electrical bus elements 22a and 22b. In this configuration, the positive polarity bus elements 22b and negative polarity bus elements 22a and the back-and-forth loop configuration cooperate to provide a stack configuration with an alternating order of polarity, so that spacer elements 26 can be electrically conductive without causing a short circuit. Of course, the spacer elements 26 can also be non-conductive. In other alternative embodiments, the bus elements can be live and ground instead of positive and negative polarity. Alternatively, the bus elements could be live elements and ground elements. In some embodiments, the electrocaloric film is an electrocaloric polymer film under tensile stress. The level of tensile stress can be adjusted by the skilled person to achieve design parameters such as to influence crystal structure ordering in an electrocaloric polymer material. In some embodiments, the tensile stress is sufficient to maintain an electrocaloric film taut or stretched, which can in some cases provide promote maintaining physical separation between film layers in a stack configuration. Although any of the embodiments described herein can be configured with electrocaloric elements under tensile stress, the loop configuration of FIG. 11 can in some embodiments promote a secure connection to the support elements when tensile stress is applied.

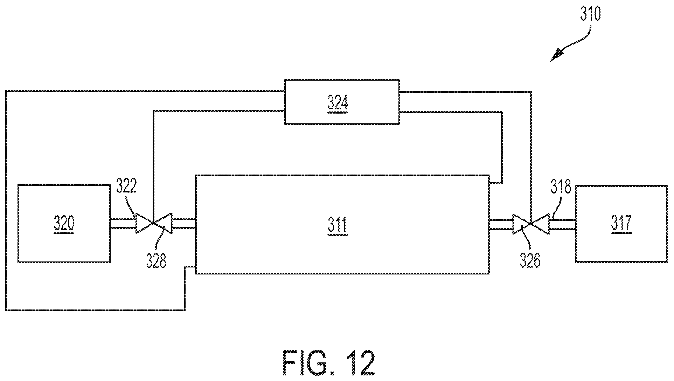

An example embodiment of a heat transfer system and its operation are further described with respect to FIG. 12. As shown in FIG. 12, a heat transfer system 310 comprises an electrocaloric stack 311 has one or more electrically conductive liquids in thermal communication with a heat sink 317 through a first thermal flow path 318, and in thermal communication with a heat source 320 through a second thermal flow path 322. A controller 324 is configured to control electrical current to through a power source (not shown) to selectively activate electrocaloric elements (not shown) in the stack 311. The controller 324 is also configured to open and close control valves 326 and 328 to selectively direct the electrically conductive liquid along the first and second flow paths 318 and 322.

In operation, the system 310 can be operated by the controller 324 applying an electric field as a voltage differential across the electrocaloric elements in the stack 311 to cause a decrease in entropy and a release of heat energy by the electrocaloric elements. The controller 324 opens the control valve 326 to transfer at least a portion of the released heat energy along flow path 318 to heat sink 317. This transfer of heat can occur after the temperature of the electrocaloric elements has risen to a threshold temperature. In some embodiments, heat transfer to the heat sink 317 is begun as soon as the temperature of the electrocaloric elements increases to be about equal to the temperature of the heat sink 317. After application of the electric field for a time to induce a desired release and transfer of heat energy from the electrocaloric elements to the heat sink 317, the electric field can be removed. Removal of the electric field causes an increase in entropy and a decrease in heat energy of the electrocaloric elements. This decrease in heat energy manifests as a reduction in temperature of the electrocaloric elements to a temperature below that of the heat source 320. The controller 324 closes control valve 326 to terminate flow along flow path 318, and opens control device 328 to transfer heat energy from the heat source 320 to the colder electrocaloric elements.

In some embodiments, for example where a heat transfer system is utilized to maintain a temperature in a conditioned space or thermal target, the electric field can be applied to the electrocaloric elements to increase its temperature until the temperature of the electrocaloric element reaches a first threshold. After the first temperature threshold, the controller 324 opens control valve 326 to transfer heat from the electrocaloric elements to the heat sink 317 until a second temperature threshold is reached. The electric field can continue to be applied during all or a portion of the time period between the first and second temperature thresholds, and is then removed to reduce the temperature of the electrocaloric elements until a third temperature threshold is reached. The controller 324 then closes control valve 326 to terminate heat flow transfer along heat flow path 318, and opens control valve 328 to transfer heat from the heat source 320 to the electrocaloric elements. The above steps can be optionally repeated until a target temperature of the conditioned space or thermal target (which can be either the heat source or the heat sink) is reached.

The present disclosure can be modified to incorporate any number of variations, alterations, substitutions or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present invention is not to be seen as limited by the foregoing description, but is only limited by the scope of the appended claims.

## Claims

1. A heat transfer system, comprising
a plurality of electrocaloric elements (12) comprising an electrocaloric film (14), a first electrode (16) on a first side of the electrocaloric film (14), and a second electrode (18) on a second side of the electrocaloric film (14); and
a fluid flow path (20) along the plurality of electrocaloric elements (12), **characterised in that** said fluid flow path is formed by corrugated fluid flow guide elements (19);
wherein the corrugated fluid flow guide elements comprise electrically conductive corrugated spacers (19) disposed between adjacent electrocaloric elements (12); and
wherein the electrically conductive corrugated spacers (19) comprise shaped electrically conductive structures in electrical contact with electrodes on adjacent electrocaloric elements (12); or
wherein the electrically conductive corrugated spacers (19) comprise an extension of conductive material electrodes on adjacent electrocaloric elements (12) in a direction normal to a surface of the electrocaloric film.

2. The heat transfer system of claim 1, wherein the electrically conductive corrugated spacers (19) are configured as a microchannel structure or an open-cell foam.

3. The heat transfer system of claim 1 or 2, wherein the electrically conductive corrugated spacers (19) comprise carbon nanotubes.

4. The heat transfer system of any of claims 1-3, wherein the plurality of electrocaloric elements (12) are arranged in an alternating order of polarity between adjacent electrocaloric elements.

5. The heat transfer system of any of claims 1-4, wherein the electrocaloric film (14) comprises an electrocaloric polymer, liquid crystal polymer (LCP), electrocaloric ceramic or an electrocaloric polymer/ceramic composite.

6. The heat transfer system of any of claims 1-5, wherein a physical separation between adjacent electrocaloric elements (12) or layers is 1 µm to 100 mm.

7. The heat transfer system of any of claims 1-6, wherein the electrocaloric elements (12) have a thickness of 1 µm to 1000 µm.

8. The heat transfer system of any of claims 1-7, comprising at least two adjacent electrocaloric elements (12) that share an electrode at least partially embedded between the electrocaloric films (14) of the adjacent electrocaloric elements (12).

9. The heat transfer system of claim 8, wherein the embedded electrode is a live electrode, and comprising ground electrodes adjacent to the fluid flow path (20).

10. The heat transfer system of any of claims 1-9, wherein the electrocaloric film (14) comprises an electrocaloric polymer film under tensile stress.

## Patentansprüche

1. Wärmeübertragungssystem, umfassend
eine Vielzahl von elektrokalorischen Elementen (12), welche einen elektrokalorischen Film (14), eine erste Elektrode (16) auf einer ersten Seite des elektrokalorischen Films (14) und eine zweite Elektrode (18) auf einer zweiten Seite des elektrokalorischen Films (14) umfassen; und
einen Fluidströmungsweg (20) entlang der Vielzahl von elektrokalorischen Elementen (12), **dadurch gekennzeichnet, dass** der Fluidströmungsweg durch gewellte Fluidströmungsführungselemente (19) gebildet wird;
wobei die gewellten Fluidströmungsführungselemente elektrisch leitende gewellte Abstandshalter (19) umfassen, welche zwischen benachbarten elektrokalorischen Elementen (12) angeordnet sind; und
wobei die elektrisch leitenden gewellten Abstandshalter (19) geformte elektrisch leitende Strukturen in elektrischem Kontakt mit Elektroden auf benachbarten elektrokalorischen Elementen (12) umfassen; oder
wobei die elektrisch leitenden gewellten Abstandshalter (19) eine Erweiterung von Elektroden aus leitendem Material auf benachbarten elektrokalorischen Elementen (12) in einer Richtung umfassen, welche normal zu einer Oberfläche des elektrokalorischen Films ist.

2. Wärmeübertragungssystem nach Anspruch 1, wobei die elektrisch leitenden gewellten Abstandshalter (19) als eine Mikrokanalstruktur oder ein offenzelliger Schaumstoff konfiguriert sind.

3. Wärmeübertragungssystem nach Anspruch 1 oder 2, wobei die elektrisch leitenden gewellten Abstandshalter (19) Kohlenstoffnanoröhren umfassen.

4. Wärmeübertragungssystem nach einem der Ansprüche 1-3, wobei die Vielzahl von elektrokalorischen Elementen (12) in einer abwechselnden Reihenfolge von Polarität zwischen benachbarten elektrokalorischen Elementen angeordnet sind.

5. Wärmeübertragungssystem nach einem der Ansprüche 1-4, wobei der elektrokalorische Film (14) ein elektrokalorisches Polymer, Flüssigkristall-Polymer (LCP), eine elektrokalorische Keramik oder einen elektrokalorischen Polymer/Keramik-Verbundstoff umfasst.

6. Wärmeübertragungssystem nach einem der Ansprüche 1-5, wobei eine physikalische Trennung zwischen benachbarten elektrokalorischen Elementen (12) oder Schichten 1 µm bis 100 mm beträgt.

7. Wärmeübertragungssystem nach einem der Ansprüche 1-6, wobei die elektrokalorischen Elemente (12) eine Dicke von 1 µm bis 1000 µm haben.

8. Wärmeübertragungssystem nach einem der Ansprüche 1-7, umfassend zumindest zwei benachbarte elektrokalorische Elemente (12), welche eine gemeinsame Elektrode haben, welche zumindest teilweise zwischen den elektrokalorischen Filmen (14) der benachbarten elektrokalorischen Elemente (12) eingebettet ist.

9. Wärmeübertragungssystem nach Anspruch 8, wobei die eingebettete Elektrode eine spannungsführende Elektrode ist, und umfassend Erdungselektroden benachbart zu dem Fluidströmungsweg (20).

10. Wärmeübertragungssystem nach einem der Ansprüche 1-9, wobei der elektrokalorische Film (14) einen elektrokalorischen Polymerfilm unter Zugspannung umfasst.

## Revendications

1. Système de transfert de chaleur, comprenant
une pluralité d'éléments électrocaloriques (12) comprenant un film électrocalorique (14), une première électrode (16) sur un premier côté du film électrocalorique (14), et une seconde électrode (18) sur un second côté du film électrocalorique (14) ; et
un chemin d'écoulement de fluide (20) le long de la pluralité d'éléments électrocaloriques (12), **caractérisé en ce que** ledit chemin d'écoulement de fluide est formé par des éléments de guidage d'écoulement de fluide ondulés (19) ;
dans lequel les éléments de guidage d'écoulement de fluide ondulés comprennent des entretoises ondulées électroconductrices (19) disposées entre des éléments électrocaloriques (12) adjacents ; et
dans lequel les entretoises ondulées électroconductrices (19) comprennent des structures électroconductrices façonnées en contact électrique avec des électrodes sur des éléments électrocaloriques (12) adjacents ; ou
dans lequel les entretoises ondulées électroconductrices (19) comprennent une extension d'électrodes en matériau conducteur sur des éléments électrocaloriques (12) adjacents dans une direction normale à une surface du film électrocalorique.

2. Système de transfert de chaleur selon la revendication 1, dans lequel les entretoises ondulées électroconductrices (19) sont configurées sous forme d'une structure à microcanaux ou d'une mousse à alvéoles ouvertes.

3. Système de transfert de chaleur selon la revendication 1 ou 2, dans lequel les entretoises ondulées électroconductrices (19) comprennent des nanotubes de carbone.

4. Système de transfert de chaleur selon l'une quelconque des revendications 1-3, dans lequel la pluralité d'éléments électrocaloriques (12) sont agencés dans un ordre de polarité alterné entre des éléments électrocaloriques adjacents.

5. Système de transfert de chaleur selon l'une quelconque des revendications 1-4, dans lequel le film électrocalorique (14) comprend un polymère électrocalorique, un polymère à cristaux liquides (PCL), une céramique électrocalorique ou un composite polymère/céramique électrocalorique.

6. Système de transfert de chaleur selon l'une quelconque des revendications 1-5, dans lequel une séparation physique entre des éléments électrocaloriques (12) ou des couches adjacent(e)s est de 1 µm à 100 mm.

7. Système de transfert de chaleur selon l'une quelconque des revendications 1-6, dans lequel les éléments électrocaloriques (12) présentent une épaisseur de 1 µm à 1 000 µm.

8. Système de transfert de chaleur selon l'une quelconque des revendications 1-7 comprenant au moins deux éléments électrocaloriques (12) adjacents qui partagent une électrode au moins partiellement noyée entre les films électrocaloriques (14) des éléments électrocaloriques (12) adjacents.

9. Système de transfert de chaleur selon la revendication 8, dans lequel l'électrode noyée est une électrode sous tension, et comprenant des électrodes de masse adjacentes au chemin d'écoulement de fluide (20).

10. Système de transfert de chaleur selon l'une quelconque des revendications 1-9, dans lequel le film électrocalorique (14) comprend un film polymère électrocalorique sous contrainte de traction.
